# DEMANDE DE BREVET EUROPEEN

(11) **EP 4 834 729 A1**
(43) Date de publication de la demande: **04.11.2026**
(21) Numéro de dépôt: 26173291.1
(22) Date de dépôt: 20.04.2026
(51) Int. Cl.: B62D 25/08, B62D 21/02, B62D 21/03, B62D 21/09, B62D 21/11, B62D 27/02, B62D 27/06

(54) **BOÎTIER POUR UN POSITIONNEMENT D'UNE TRAVERSE POUR UN CADRE DE CHÂSSIS D'UN VÉHICULE AUTOMOBILE**

(30) Priorité: 30.04.2025 FR 2504628
(71) Demandeur: Renault s.a.s, 92100 Boulogne Billancourt (FR)
(72) Inventeur: BUFFETAUD, Julien, 78280 Guyancourt (FR); GHIRARDINI, Armand, 78280 Guyancourt (FR); PAROLINI, Pascal, 78280 Guyancourt (FR)

(57) **Abrégé**

Boîtier (10) pour un positionnement d'une traverse (3) par rapport à un longeron (2) d'un cadre de châssis (1) d'un véhicule automobile, le boîtier (10) étant caractérisé en ce qu'il comprend :
- au moins une patte de fixation (18, 19) configurée pour solidariser le boîtier (10) sur le longeron (2),
- une zone de réception (11) configurée pour recevoir une portion de la traverse (3) du cadre de châssis (1) du véhicule automobile, notamment une portion extrémale (31) de ladite traverse (3) ; la zone de réception (11) comprenant :
- une paroi de fond (12) configurée pour être solidarisée à ladite portion de traverse (3) ;
- une structure de guidage comprenant au moins un pan (16, 17) incliné par rapport à la paroi de fond (12) du boîtier (10), la structure de guidage étant configurée pour aiguiller la portion de la traverse (3) en direction de la paroi de fond (12).

## Description

### Domaine Technique de l'invention

L'invention concerne un boîtier pour le positionnement d'une traverse pour un cadre de châssis pour un véhicule automobile. L'invention concerne également un cadre de châssis pour un véhicule automobile, le cadre de châssis comprenant des longerons sur lesquels sont agencés deux boîtiers de positionnement. L'invention concerne par ailleurs un véhicule automobile comprenant un tel cadre de châssis ou comprenant des tels boîtiers de positionnement.

### Etat de la technique antérieure

De manière générale, une traverse pour véhicule automobile assure la stabilité d'un châssis dudit véhicule automobile. Une telle traverse peut notamment maintenir des suspensions d'un moteur, notamment un moteur électrique, agencé dans une partie avant dudit véhicule automobile. Différentes techniques de fixation d'une telle traverse par rapport à son environnement sont connues. Il est par exemple connu de fixer une traverse sur un berceau de moteur. Il est également connu de fixer la traverse sur un longeron au moyen de coiffes vissées sur les longerons.

Toutefois, les techniques de fixation usuelles d'une traverse n'apportent pas de grande satisfaction, car il n'est pas aisé de trouver un compromis satisfaisant entre le volume, la masse et la raideur d'une telle traverse et de son moyen de fixation, sans compter les contraintes économiques.

### Présentation de l'invention

Le but de l'invention est de proposer une alternative aux techniques de mise en position et de fixation d'une traverse connues de l'art antérieur. Un objectif de cette invention est donc de faciliter la mise en position et la fixation d'une traverse par rapport à son environnement.

### Résumé de l'invention

A cet effet, l'invention porte sur un boîtier pour un positionnement d'une traverse par rapport à un longeron d'un cadre de châssis d'un véhicule automobile, le boîtier étant caractérisé en ce qu'il comprend :
- au moins une patte de fixation configurée pour solidariser le boîtier sur le longeron,
- une zone de réception configurée pour recevoir une portion de la traverse du cadre de châssis du véhicule automobile, notamment une portion extrémale de ladite traverse ; la zone de réception comprenant :
   - une paroi de fond configurée pour être solidarisée à ladite portion de traverse ;
   - une structure de guidage comprenant au moins un pan incliné par rapport à la paroi de fond du boîtier, la structure de guidage étant configurée pour aiguiller la portion de la traverse en direction de la paroi de fond.

Selon un mode de réalisation, le boîtier présente un agencement symétrique.

Selon un mode de réalisation, la paroi de fond comprend au moins un orifice configuré pour coopérer avec un moyen de fixation permettant de fixer la portion de traverse à ladite paroi de fond.

Selon un mode de réalisation, la structure de guidage comprend au moins une paroi latérale liée à la paroi de fond et au moins un premier pan incliné par rapport à la paroi latérale de sorte à conférer une forme évasée à la structure de guidage.

Selon un mode de réalisation, la structure de guidage comprend en outre au moins un deuxième pan incliné par rapport au premier pan.

Selon un mode de réalisation, le boîtier comprend au moins une patte de fixation latérale liée à la au moins une paroi latérale de la structure de guidage.

Selon un mode de réalisation, le boîtier comprend un élément de positionnement configuré pour coopérer avec un repère présent sur un longeron du cadre de châssis du véhicule automobile afin de positionner le boîtier par rapport audit longeron.

Selon un mode de réalisation, le boîtier est obtenu lors d'un procédé de pliage.

L'invention porte également sur un cadre de châssis pour un véhicule automobile, le cadre de châssis comprenant deux longerons agencés de manière parallèle, le cadre de châssis étant caractérisé en ce qu'il comprend deux boîtiers selon l'une des revendications précédentes, les deux boîtiers étant chacun fixés sur l'un des deux longerons.

L'invention porte également sur un véhicule automobile caractérisé en ce qu'il comprend un cadre de châssis tel que décrit précédemment ou un boîtier tel que décrit précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 illustre schématiquement une portion d'un cadre de châssis pour un véhicule automobile.
La figure 2 est une vue en perspective cavalière d'un mode de réalisation préférentiel du boîtier.
La figure 3 est une autre vue en perspective cavalière du mode de réalisation préférentiel du boîtier.
La figure 4 est une vue en coupe d'un détail du cadre de châssis de la figure 1.

### Description détaillée

Dans ce document, l'axe X désigne l'axe longitudinal du véhicule automobile. En marche avant et en ligne droite, le véhicule progresse de l'arrière vers l'avant, selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Z désigne l'axe perpendiculaire à l'axe X et à l'axe Y. On considère que le véhicule repose sur un sol horizontal. L'axe Z est alors un axe vertical, orienté de bas en haut. Les axes X, Y et Z forment un repère orthogonal. Ce même repère, défini par référence à un véhicule automobile, sera aussi utilisé pour décrire le cadre du châssis 1 et le boîtier 10, même considérés hors du véhicule, puisqu'ils sont destinés à un montage selon une orientation spécifique dans le véhicule automobile.

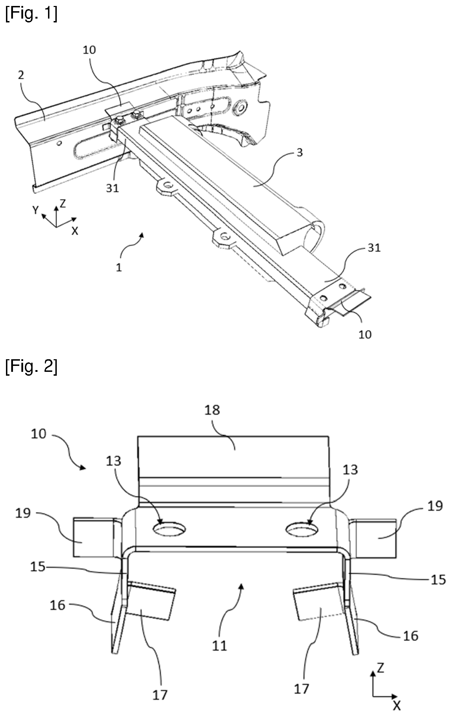

Sur la figure 1 est illustrée une portion d'un cadre de châssis 1 d'un véhicule automobile. Dans l'exemple de la figure 1, il s'agit notamment d'un cadre de châssis 1 configuré pour soutenir, au moins en partie, un moteur électrique qui est destiné à être monté dans un véhicule électrique. Un tel moteur (non illustré sur les figures) est destiné à être porté par une pluralité de suspensions, notamment par trois suspensions distinctes. Une première suspension peut être agencée sur un berceau du véhicule automobile tandis que les deux autres suspensions peuvent être agencés dans des logements prévus à cet effet dans la structure de la traverse.

De manière générale, le cadre de châssis 1 comprend deux longerons 2 agencés de manière parallèle selon la direction longitudinale X du véhicule et une traverse 3 qui s'étend perpendiculairement entre lesdits longerons 2, selon la direction transversale Y. Dans le cas de la figure 1, seul l'un des deux longerons 2 est illustré. La traverse 3 et le longeron 2 sont alors agencés perpendiculairement entre eux. Un boîtier 10 est agencé à l'interface entre la traverse 3 et le longeron 2. Le boîtier 10, solidarisé au longeron 2, sert plus particulièrement à positionner la traverse 3 par rapport au longeron 2 lors de l'assemblage du cadre de châssis 1, et il sert également à fixer la traverse 3 auxdits longeron 2 une fois la mise en position terminée.

Le positionnement de la traverse 3 par rapport aux longerons 2 est assuré plus particulièrement par deux boîtiers 10 distincts qui sont fixés sur les longerons 2 de sorte à se faire face. Ces boîtiers 10 sont configurés pour chacun coopérer avec une portion de la traverse 3, en particulier avec les extrémités 31 de la traverse 3. Ainsi, dans le mode de réalisation illustré sur la figure 1, les boîtiers 10 sont disposés de part et d'autre de la traverse 3, et plus particulièrement au niveau des extrémités 31 de ladite traverse 3. Les deux boîtiers 10 assurent ainsi une double fonction de mise en position d'une part et de fixation de la traverse 3 d'autre part, afin de figer la position de ladite traverse 3 par rapport auxdits longerons 2 une fois la mise en position achevée.

Selon un mode de réalisation préférentiel illustré sur la figure 1, les deux boîtiers 10 sont identiques : il n'y a donc pas de distinction entre le boîtier 10 situé sur le côté gauche du cadre de châssis 1 et le boîtier 10 situé sur le côté droit du cadre de châssis 1. Pour ce faire, chaque boîtier 10 présente notamment un agencement symétrique, c'est-à-dire qu'il présente un plan de symétrie dans sa structure. Le plan de symétrie du boîtier 10 s'étend parallèlement au plan formé par les axes Y et Z du repère introduit précédemment. En plus de faciliter la production en série d'un tel boîtier 10 symétrique et de permettre l'interchangeabilité des boîtiers 10 entre le côté gauche et le côté droit du cadre de châssis 1 du véhicule automobile, une structure symétrique du boîtier 10 permet un positionnement plus efficace de la traverse 3 par rapport aux longerons 2.

Bien que le cadre du châssis 1 du véhicule automobile comprenne deux boîtiers 10, la description qui suit présente les caractéristiques techniques d'un boîtier 10 de manière générale, étant donné que les deux boîtiers 10 sont identiques et qu'ils présentent donc les mêmes caractéristiques techniques. Par ailleurs, la structure symétrique du boîtier 10 est une caractéristique optionnelle très avantageuse. Dans la suite de la description, les modes de réalisations décrits pour le boîtier 10 présentent tous une structure symétrique.

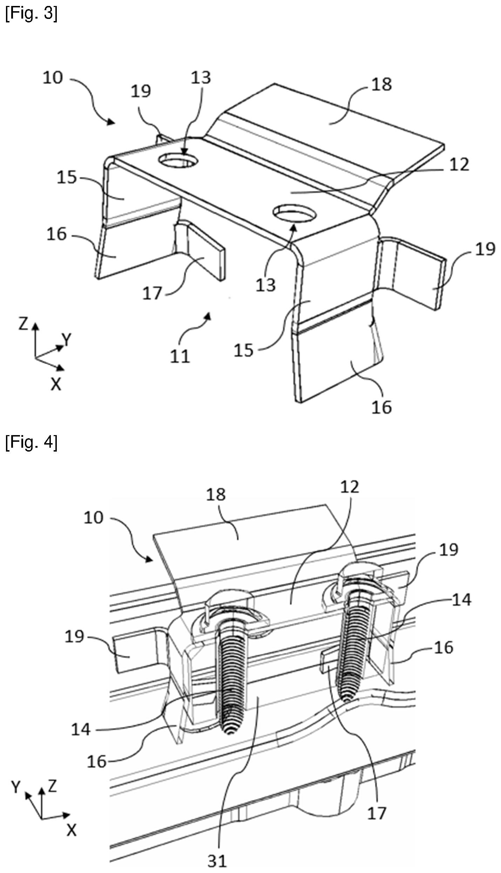

D'une manière commune à tous les modes de réalisation, un tel boîtier 10 comprend une zone de réception 11 configurée pour recevoir une portion de la traverse 3 du cadre de châssis 1 du véhicule automobile, notamment pour recevoir une portion extrémale 31 de la traverse 3, c'est-à-dire une portion située à l'une des extrémités 31 de la traverse 3. Selon un mode de réalisation préférentiel illustré sur la figure 2 et sur la figure 3, la zone de réception 11 du boîtier 10 se trouve dans une zone centrale dudit boîtier 10.

D'une manière commune à tous les modes de réalisation, la zone de réception 11 du boîtier 10 comprend une paroi de fond 12 configurée pour être solidarisée à la portion de la traverse 3 de véhicule automobile évoquée précédemment, la paroi de fond 12 est notamment en contact avec l'une des portions extrémales 31 de la traverse 3. Dans le mode de réalisation illustré sur la figure 1, les parois de fond 12 respectives des deux boîtiers 10 recouvrent les portions extrémales 31 de la traverse 3.

Selon un mode de réalisation préférentiel illustré sur la figure 2 et sur la figure 3, la paroi de fond 12 du boîtier 10 comprend au moins un orifice 13 configuré pour coopérer avec un moyen de fixation 14 permettant de fixer la portion de la traverse 3 à ladite paroi de fond 12 de la zone de réception 11 du boîtier 10. Dans le mode de réalisation illustré sur l'ensemble des figures, la paroi de fond 12 comprend notamment deux orifices 13 à travers lesquelles des vis 14 s'étendent pour solidariser le boîtier 10 à la traverse 3. Ceci est plus particulièrement illustré sur la figure 4. Les orifices 13 dans la paroi de fond 12 sont agencés de manière symétrique par rapport au plan de symétrie du boîtier 10. Les portions extrémales 31 de la traverse 3 destinées à être logées dans les zones de réception 11 des boîtiers 10 comprennent alors des alésages compatibles avec les vis 14. Le nombre d'orifice 13 peut être différent de deux. D'autres types de moyens de fixations 14 peuvent être envisagés.

La zone de réception 11 du boîtier 10 comprend également une structure de guidage configurée pour aiguiller la portion de la traverse 3 de véhicule automobile en direction de la paroi de fond 12. Pour ce faire, la structure de guidage comprend au moins un pan 16, 17 incliné par rapport à la paroi de fond 12 du boîtier 10. La structure de guidage comprend notamment plusieurs parois 15 et plusieurs pans 16, 17 qui confèrent une forme évasée à la structure de guidage de la zone de réception 11 du boîtier 10.

Plus particulièrement, la structure de guidage de la zone de réception 11 du boîtier 10 comprend au moins une paroi latérale 15 liée à la paroi de fond 12 et au moins un premier pan 16 incliné par rapport à la paroi latérale 15 de sorte à conférer une forme évasée à la structure de guidage. La au moins une paroi latérale 15 s'étend notamment de manière perpendiculaire par rapport à la paroi de fond 12 et le premier plan incliné est notamment formé dans un prolongement de la paroi latérale 15.

Dans le mode de réalisation illustré sur la figure 2, le boîtier 10 comprend plus particulièrement deux parois latérales 15 liées à deux bords opposés de la paroi de fond 12, les deux parois latérales 15 étant alors disposées de manière symétrique de part et d'autre de la paroi de fond 12. Selon un mode de réalisation particulier, les deux parois latérales 15 sont perpendiculaires à la paroi de fond 12, elles sont donc parallèles entre elles et agencées en vis-à-vis l'une de l'autre. De manière préférentielle, l'agencement des parois latérales 15 par rapport à la paroi de fond 12 est tel qu'il permet d'envelopper au moins partiellement la portion de la traverse 3 reçue dans la zone de réception 11 ainsi formée, comme illustré notamment sur la figure 4.

Comme indiqué précédemment, la structure de guidage du boîtier 10 comprend également au moins un premier pan 16 incliné par rapport à la paroi latérale 15. Dans le mode de réalisation du boîtier 10 illustré sur la figure 2 illustré et sur la figure 3, le boîtier 10 présente plus particulièrement deux premiers pans 16 inclinés agencés de manière symétrique par rapport au plan de symétrie du boîtier 10. Les premiers pans 16 inclinés permettent de guider la portion de la traverse 3 destinée à être logée dans la zone de réception 11 vers la paroi de fond 12. Autrement dit, la forme évasée de la structure de guidage de la zone de réception 11 du boîtier 10 permet de centrer la portion de la traverse 3 par rapport à la zone de réception 11 du boîtier 10 et d'assurer un positionnement correct de la traverse 3 selon la direction longitudinale du véhicule automobile.

Selon un mode de réalisation préférentiel du boîtier 10, la structure de guidage comprend en outre au moins un deuxième pan 17 incliné par rapport au premier pan 16. Dans le mode de réalisation illustré sur la figure 2, le boîtier 10 comprend plus particulièrement deux deuxième pans 17 inclinés agencés de manière symétrique. Chaque deuxième pan 17 est alors lié bord à bord à un premier pan 16. Les deuxièmes pans 17 sont inclinés de sorte à contribuer à la forme évasée de la structure de guidage et permettent de centrer la portion de la traverse 3 par rapport au boîtier 10 et d'assurer un positionnement correct de la traverse 3 selon la direction transversale du véhicule automobile.

Les angles d'inclinaisons pour le ou les premiers pans 16 et pour le ou les deuxièmes pans 17 peuvent être identiques ou bien différents. Les angles d'inclinaison du ou des premiers pans 16 et du ou des deuxièmes pans 17 peuvent être corrélés à la taille desdits pans 16, 17. Dans le mode de réalisation illustré sur l'ensemble des figures, les deuxièmes pans 17 inclinés sont plus petits en taille, notamment en surface, que les premiers pans 16 inclinés. La taille, la forme et l'orientation de la ou des parois latérales 15, du ou des premiers pans 16 et du ou des deuxièmes pans 17 peuvent être adaptées pour assurer un positionnement efficace de la traverse 3 par rapport au longeron 2.

En plus de participer au guidage de la portion extrémale 31 de la traverse 3 vers la paroi de fond 12 du boîtier 10, le ou les deuxièmes pans 17 inclinés permettent d'éviter un potentiel contact entre ladite traverse 3 et les longerons 2 lors de l'assemblage du cadre de châssis 1. Ceci permet d'éviter un frottement entre la traverse 3 et les longerons 2 qui pourrait apporter des problèmes de corrosion.

Les premiers pans 16 inclinés et deuxième pans 17 inclinés confèrent une ouverture relativement large à la structure de guidage de la zone de réception 11 du boîtier 10, ceci permet d'aiguiller la portion extrémale 31 de la traverse 3 vers une section plus étroite de la zone de réception 11, formée par les parois latérales 15 de la structure de guidage, afin de guider ladite portion de la traverse 3 vers la paroi de fond 12 du boîtier 10.

La solidarisation du boîtier 10 sur le longeron 2 peut être une fixation à demeure, telle qu'une solidarisation par soudage, notamment par soudage par point. Alternativement, d'autres types de solidarisations, démontables ou indémontables, peuvent être envisagées. Il est par exemple possible d'envisager une solidarisation du boîtier 10 par vissage sur le longeron 2. D'une manière commune à tous les modes de réalisation, le boîtier 10 comprend au moins une patte de fixation 18, 19 configurée pour solidariser le boîtier 10 sur l'un des longerons 2 du cadre de châssis 1 du véhicule automobile. La au moins une patte de fixation 18, 19 se trouve dans une zone périphérique du boîtier 10, tandis que la zone de réception 11 décrite précédemment occupe une zone centrale dudit boîtier 10.

Selon le mode de réalisation illustré sur la figure 2, le boîtier 10 comprend plusieurs pattes de fixation 18, 19 destinées à être plaquées et fixées sur l'un des deux longerons 2 du cadre de châssis 1. Le boîtier 10 comprend par exemple une patte de fixation centrale 18 et au moins une patte de fixation latérale 19, la au moins une patte de fixation latérale 19 étant liée à la au moins une paroi latérale 15 de la structure de guidage de la zone de réception 11 du boîtier 10. Le boîtier 10 comprend plus particulièrement deux pattes de fixation latérales 19 qui sont agencées de part et d'autre du plan de symétrie du boîtier 10. Dans le mode de réalisation illustré sur la figure 2, le boîtier 10 présente donc trois pattes de fixation 18, 19 distinctes : la patte de fixation centrale 18, liée bord à bord avec la paroi de fond 12 de la zone de réception 11, et deux pattes de fixation latérale 19, liées bord à bord avec les parois latérales 15 de la structure de guidage de la zone de réception 11. Dans le mode de réalisation illustré sur les figures 2 et 3, les deux pattes de fixation latérales 19 s'étendent perpendiculairement par rapport aux parois latérales 15 auxquelles elles sont liées. Les deux pattes de fixation latérales 19 sont ainsi disposées de part et d'autre de la patte de fixation centrale 18.

Selon le mode de réalisation illustré sur la figure 2 et sur la figure 3, chaque patte de fixation latérale 19 est agencée dans une zone périphérique du boîtier 10, entre la patte de fixation centrale 18 et l'un des premiers pans 16 inclinés de la structure de guidage de la zone de réception 11 du boîtier 10. La ou les pattes de fixation latérales 19 sont destinées à être solidarisées à un même longeron 2. En plus d'assurer, au moins en partie, la fixation du boîtier 10 sur le longeron 2, les pattes de fixation latérales 19 permettent également une reprise des efforts pour éviter une déformation du boîtier 10 sous le poids de la traverse 3 et du moteur une fois l'assemblage terminé.

Dans le mode de réalisation illustré sur la figure 2 et sur la figure 3, la patte de fixation centrale 18 du boîtier 10 est inclinée par rapport à la paroi de fond 12. La patte de fixation centrale 18 est agencée au-dessus des deuxièmes pans 17 inclinés qui sont liés bord à bord avec les parois latérales 15. De manière générale, la forme, la taille et la position de la ou des pattes de fixation 18, 19 du boîtier 10 est adaptée pour que la ou les pattes de fixation 18, 19 puissent être plaquées contre une portion d'une surface de l'un des longerons 2 du cadre de châssis 1 du véhicule et fixée audit longeron 2. Autrement dit, la forme, la taille et la position de la ou des pattes de fixation 18, 19 du boîtier 10 est en grande partie dictée par la géométrie du longeron 2 auquel le boîtier 10 est destiné à être fixé, et par le type de fixation choisi (soudage, vissage, ...).

Selon un mode de réalisation préférentiel, la ou les pattes de fixation 18, 19 du boîtier 10 sont soudées sur le longeron 2. Les pattes de fixation 18, 19 ont alors des dimensions qui permettent de souder le boîtier 10 au longeron 2 via des points de soudure. En particulier, les pattes de fixation 18, 19 présentent une forme en quadrilatère, notamment carrée ou rectangulaire, avec une longueur et une largeur de quelques dizaines de millimètres, par exemple vingt-cinq millimètres. Alternativement, la ou les pattes de fixation 18, 19 peuvent comprendre des trous configurés pour coopérer avec des éléments de fixation permettant le fixer le boîtier 10 sur le longeron 2 du cadre du châssis 1. D'autres moyens de fixation peuvent être envisagés pour solidariser le boîtier 10 sur le longeron 2 du cadre du châssis 1 du véhicule automobile.

Selon un mode de réalisation préférentiel, mais non illustré sur les figures, le boîtier 10 peut en outre comprendre un élément de positionnement configurée pour coopérer avec un repère présent sur l'un des longerons 2 afin de positionner le boîtier 10 par rapport audit longeron 2. L'élément de positionnement peut par exemple se présenter sous la forme d'un doigt ou d'un crochet, tandis que le repère présent sur le longeron 2 peut se présenter sous la forme d'un trou ou d'un enfoncement. Dans cet exemple, le doigt ou le crochet du boîtier 10 est alors configuré pour coopérer avec le trou ou l'enfoncement présent sur le longeron 2 afin de positionner le boîtier 10 par rapport au longeron 2 avant la solidarisation dudit boîtier 10 sur le longeron 2. D'autres configurations peuvent être imaginées pour l'élément de positionnement sur le boîtier 10 et/ou pour le repère présent sur le longeron 2.

Le boîtier 10 peut être réalisé dans un matériau métallique, tel que de la tôle, et notamment en acier, de préférence en acier inoxydable pour éviter une corrosion du boîtier 10. Le boîtier 10 en matériau métallique peut alors être obtenu à l'aide d'un procédé de pliage, qui est un procédé de fabrication simple, économique, efficace et aisément applicable pour des pièces en série. Alternativement, le boîtier 10 peut être réalisé dans un matériau plastique, ce qui peut le rendre plus léger.

Dans le cas où le boîtier 10 comprend un matériau métallique et qu'il est obtenu à l'aide d'un procédé de pliage, l'épaisseur des différentes parois du boîtier 10 est notamment identique pour toutes les parois. L'épaisseur est par exemple comprise entre 1 mm et 4 mm, et notamment supérieure ou égale à 1,5 mm, voire supérieure ou égale à 2 mm. D'autres valeurs ou plages de valeurs peuvent être considérées pour l'épaisseur des parois du boîtier 10.

Optionnellement, un traitement de surface peut être appliqué au boîtier 10 pour le protéger contre une potentielle corrosion. Le traitement de surface peut par exemple s'apparenter à une cataphorèse. Toutefois, d'autres types de traitements de surface peuvent être envisagés.

Il est ainsi possible de concevoir et de fabriquer un boîtier 10, voire plusieurs boîtiers 10 et plus particulièrement au moins deux boîtiers 10 pour assurer une double fonction de mise en position d'une traverse 3 et de fixation de cette même traverse 3, afin de figer la position de ladite traverse 3 par rapport aux longerons 2 une fois la mise en position achevée, pour fabriquer le cadre de châssis 1 pour un véhicule automobile.

## Revendications

1. Boîtier (10) pour un positionnement d'une traverse (3) par rapport à un longeron (2) d'un cadre de châssis (1) d'un véhicule automobile, le boîtier (10) étant **caractérisé en ce qu'**il comprend :
- au moins une patte de fixation (18, 19) configurée pour solidariser le boîtier (10) sur le longeron (2),
- une zone de réception (11) configurée pour recevoir une portion de la traverse (3) du cadre de châssis (1) du véhicule automobile, notamment une portion extrémale (31) de ladite traverse (3) ; la zone de réception (11) comprenant :
- une paroi de fond (12) configurée pour être solidarisée à ladite portion de traverse (3) ;
- une structure de guidage comprenant au moins un pan (16, 17) incliné par rapport à la paroi de fond (12) du boîtier (10), la structure de guidage étant configurée pour aiguiller la portion de la traverse (3) en direction de la paroi de fond (12).

2. Boîtier (10) selon la revendication précédente, **caractérisé en ce qu'**il présente un agencement symétrique.

3. Boîtier selon l'une des revendications précédentes, **caractérisé en ce que** la paroi de fond (12) comprend au moins un orifice (13) configuré pour coopérer avec un moyen de fixation (14) permettant de fixer la portion de traverse (3) à ladite paroi de fond (12).

4. Boîtier selon l'une des revendications précédentes, **caractérisé en ce que** la structure de guidage comprend :
- au moins une paroi latérale (15) liée à la paroi de fond (12) ;
- au moins un premier pan (16) incliné par rapport à la paroi latérale (15) de sorte à conférer une forme évasée à la structure de guidage.

5. Boîtier selon la revendication précédente, **caractérisé en ce que** la structure de guidage comprend en outre au moins un deuxième pan (17) incliné par rapport au premier pan (16).

6. Boîtier selon l'une des revendications 4 ou 5, **caractérisé en ce qu'**il comprend au moins une patte de fixation latérale (19) liée à la au moins une paroi latérale (15) de la structure de guidage.

7. Boîtier selon l'une des revendications précédentes, **caractérisé en ce qu'**il comprend un élément de positionnement configuré pour coopérer avec un repère présent sur un longeron (2) du cadre de châssis (1) du véhicule automobile afin de positionner le boîtier (10) par rapport audit longeron (2).

8. Boîtier (10) selon l'une des revendications précédentes, **caractérisé en ce qu'**il est obtenu lors d'un procédé de pliage.

9. Cadre de châssis (1) pour un véhicule automobile, le cadre de châssis (1) comprenant deux longerons (2) agencés de manière parallèle, le cadre de châssis (1) étant **caractérisé en ce qu'**il comprend deux boîtiers (10) selon l'une des revendications précédentes, les deux boîtiers (10) étant chacun fixés sur l'un des deux longerons (2).

10. Véhicule automobile **caractérisé en ce qu'**il comprend un cadre de châssis (1) selon la revendication précédente ou un boîtier (10) selon l'une des revendications 1 à 8.
